# EUROPÄISCHE PATENTANMELDUNG

(11) **EP 1 486 321 A1**
(43) Veröffentlichungstag der Anmeldung: **15.12.2004**
(21) Anmeldenummer: 04013641.8
(22) Anmeldetag: 09.06.2004
(51) Int. Cl.: B29D 31/515, A43B 17/14

(54) **Verfahren zum Herstellen einer Schuheinlage**

(30) Priorität: 10.06.2003 DE 10326486
(71) Anmelder: Lory Orthopädie Schuhtechnik GmbH, 86152 Augsburg (DE)
(72) Erfinder: Lory, Karl-Heinz, 86152 Augsburg (DE)
(74) Vertreter: Schmitz, Hans-Werner, Dipl.-Ing.

(57) **Zusammenfassung**

Die Erfindung betrifft ein Verfahren zum Herstellen einer Schuheinlage mit den Verfahrensschritten wie Herstellen eines Trägers aus Trägermaterial aus thermoplastisch verformbarem Kunststoff, Herstellen einer Schablone, die vorzugsweise mit einem Muster von in ihrer Anordnung, Größe und Anzahl sowie Stärke anpassbaren Ausnehmungen versehen wird, Auflegen der Schablone auf zumindestens eine Seite des Trägers, Auflegen einer konturierten Auflageschicht auf die Schablone und Verpressen des Trägers und der Schablone unter gleichzeitiger Aufbringung von Wärme.

## Beschreibung

Die Erfindung betrifft ein Verfahren zum Herstellen einer Schuheinlage gemäß Anspruch 1.

Schuheinlagen können als flache Einlagen oder als Einlegesohlen hergestellt werden, die eine an die Fußgeometrie angepasste, dreidimensionale Form haben.

Insbesondere die Herstellung von orthopädischen Schuheinlagen, die dazu geeignet sind, Fußreflexzonen und/oder Sehnenansätze der Fußsohle gezielt zu stimulieren oder inhibieren, sind häufig äußerst aufwendig. Denn hierfür muss eine individuelle Anpassung der Schuheinlage vorgenommen werden, die vor allem einen hohen Zeitaufwand für die Herstellung erfordert.

Es ist daher Aufgabe der vorliegenden Erfindung, ein Verfahren zum Herstellen einer Schuheinlage, insbesondere einer orthopädisch anpassbaren Schuheinlage zu schaffen, mit der Zeit- und Fertigungsaufwand gegenüber bekannten Verfahren erheblich vermindert werden kann.

Die Lösung dieser Aufgabe erfolgt durch die Merkmale des Anspruches 1.

Das erfindungsgemäße Verfahren zeichnet sich vor allem durch das Herstellen einer Schablone aus, die mit einem standardisierten Muster von Ausnehmungen versehen ist und die mit einem vorzugsweise standardisierten Träger aus einem Trägermaterial kombiniert werden kann, das aus thermoplastisch verformbarem Kunststoff besteht. Durch diese Schablone ist es möglich, beim Verpressen des Trägermaterials mit der Schablone gezielt Erhebungen oder Noppen auf einer oder auch beiden Seiten des Trägers zu schaffen, die bei der Benutzung eines Schuhes, in den diese Einlage eingelegt wird, gezielt ein oder mehrere Gebiete der Fußsohle, wie beispielsweise Sehnenansätze und/oder Relexzonen, stimulieren können.

Der wesentliche Vorteil dieses Vorgehens besteht darin, dass die Schablone ein standardisiertes Bauteil darstellt, das nach anatomischen Gegebenheiten vorgefertigt werden kann, so dass sich die Herstellung einer, insbesondere mit Stimulationspunkten versehenen Einlage erheblich vereinfacht und damit sowohl schneller als auch kostengünstiger wird. Zur weiteren Vereinfachung und Standardisierung ist es möglich, eine Lochschablone in Abmessungen zu fertigen, die größer sind, als die zu verformenden Folien. Dabei können die Lochmuster stets an der gleichen Stelle bleiben. Dies ergibt den Vorteil, dass mit einer Schablone eine Mehrzahl von unterschiedlichen Folien zur Herstellung der Einlage verpreßt werden können, ohne dass eine Anpassung der Schablone an die unterschiedlichen Größen der Folien erforderlich ist. Ferner ergibt diese Maßnahme den Vorteil, dass auch unterschiedliche Einlagenformen, die beispielsweise im Spitzenbereich breiter oder schmaler sein können, unter Verwendung einer einzigen Schablone hergestellt werden können.

Hierbei ist es natürlich möglich, für besondere Einsatzzwecke die Ausnehmungen der Schablone in ihrer Anordnung, Größe und Anzahl sowie ihrer Stärke anzupassen, wodurch sich zwar die Anzahl der vorzufertigenden Schablonen erhöht, jedoch dennoch die Herstellung einer Einlage aufgrund der Verwendung der Schablone deutlich einfacher wird.

Durch die Anpassung der Materialstärke der Schablone und damit der Höhe der Ausnehmung ist es hierbei insbesondere möglich, unterschiedlich hohe Stimulationspunkte, Noppen oder Anformungen auch großflächiger Art zu schaffen, was die Möglichkeiten zur Ausbildung unterschiedlichster Einlagenarten erheblich erhöht.

Die Schablone besteht erfindungsgemäß aus einem Material, das beim thermoplastischen Verpressen nicht am Trägermaterial anhaftet, sondern nach dem Verformungsvorgang ohne weitere Hilfsmittel vom verformten Trägermaterial abgezogen werden kann, so dass die Schablone ein wiederverwendbares Teil darstellt.

Vom Prinzip her ist es möglich, eine Einlage aus einer einzigen Lage Trägermaterial herzustellen. Natürlich ist es jedoch auch möglich, neben dem Trägermaterial weitere Lagen zur Herstellung der Einlage zu verwenden, wie beispielsweise eine Schicht aus Leder, Stoff oder weiteren thermoplastisch verformbaren Materialien, je nach dem, welche Art von Einlage je nach den Bedürfnissen des Schuhbenutzers hergestellt werden soll.

Das erfindungsgemäße Verfahren zeichnet sich ferner durch die Verwendung einer konturierten Auflageschicht aus, die beispielsweise in besonders bevorzugter Ausführungsform als eine Gummiauflage ausgebildet sein kann. Diese Auflageschicht weist eine konturierte Oberfläche auf, die beispielsweise aus einem Muster von Erhebungen bestehen kann, das dem Lochmuster der Schablone entspricht. Alternativ ist es jedoch möglich, dass die Auflageschicht ein beliebig geformtes konturiertes Muster aus Erhebungen beliebiger Art aufweisen kann, die dem Zweck dienen, Lufteinschlüsse beim Verpressen der Einlage aus dem Bereich der Ausnehmungen der Schablone zu entfernen. Dies ergibt den Vorteil, dass selbst bei sehr dünnen Trägern, die häufig als Folie aus Vinylacetat oder ähnlichem thermoplastisch verformbarem Kunststoff bestehen, das Folienmaterial ausreicht, um in die Löcher der Schablone gepresst zu werden. Hierbei ergibt sich ferner der Vorteil, dass die Löcher in ihrer vorgegebenen Form beim Verpressen verbleiben können und nicht durch den Pressvorgang, beispielsweise in ovale Form, verzogen werden.

Derartig dünne Folien, vorzugsweise aus Vinylacetat, werden vor allem deswegen bevorzugterweise verwendet, da die üblicherweise aus Leder bestehende Auflagefläche der herzustellenden Einlage für den Fuß des Benutzers nicht mit Klebstoff zum Zwecke der Verbindung mit der Trägerfolie versehen werden muss, so dass beim erfindungsgemäßen Verfahren ein Eindringen von Klebstoff in das Leder verhindert werden kann, da das erfindungsgemäße Verfahren eine Verwendung von Klebstoff nicht erforderlich macht.

Nach dem Verpressen wird sowohl die Auflageschicht als auch die Schablone vom Träger entfernt, so dass dann die Einlage eventuell erforderlichen weiteren Verarbeitungsschritten, wie beispielsweise einem Beschleifen der Ränder, zugeführt werden kann.

Vom Prinzip her ist es erfindungsgemäß möglich, lediglich eine Trägerschicht zur Herstellung der Einlage zu verwenden.

Üblicherweise bestehen komfortablere Einlagen jedoch aus einer Mehrzahl von Schichten, wie beispielsweise einer Lederschicht als Auflagefläche für den Fuß, einer darauf angeordneten Folie aus Kunststoff, einer wiederum darauf angeordneten Textilschicht, einer weiteren Folie, einer weiteren Textilschicht und einer letzten Folie, auf der die Lochschablone und die Auflageschicht aufgelegt wird.

Die Unteransprüche haben vorteilhafte Weiterbildungen der Erfindung zum Inhalt.

Wie zuvor bereits erwähnt, ist es grundsätzlich möglich, auf einer oder auf beiden Seiten des Trägers Erhebungen oder Noppen herzustellen. Ebenso ist die Zahl der Noppen, ihre Höhe und Kontur, mit Hilfe der Schablone anpassbar.

Bei der Herstellung ist es ferner möglich, zunächst den Träger in die gewünschte Kontur vorzuschneiden oder vorzustanzen und dann die Schablone auf dem Träger aufzulegen. Bei dieser Art der Herstellung ist nach der Verpressung die Grundform der Einlage bereits vorhanden und muss nach dem Verpressen üblicherweise lediglich von dem sich immer ergebenden Überstand (üblicherweise durch Abschneiden) befreit werden. Ferner ist es möglich, nach diesem Herstellungsvorgang die Kanten zu beschleifen, um einen äußerst dünnen Randbereich zu erreichen.

Zur weiteren Vereinfachung des Verfahrens ist es bei einer besonders bevorzugten Ausführungsform jedoch möglich, den Träger in einer beliebigen, vorzugsweise geometrisch sehr einfachen Form und die Schablone in der Einlagenform und Größe herzustellen. Nach dem Verpressen von Träger und Schablone ist es bei dieser Ausführungsform des erfindungsgemäßen Verfahrens möglich, lediglich den Überstand des Trägermaterials über die in das Trägermaterial eingepresste Schablone zu entfernen, wodurch sich der besondere Vorteil ergibt, dass üblicherweise ein Beschleifen des Randes entbehrlich ist, da dieser bereits durch das Einpressen des Materials der Schablone in das Trägermaterial sehr flach und glatt ist.

Ferner ist es möglich, die Erhebungen oder Noppen nach der Herstellung in ihrer Form und Höhe nachzubearbeiten, insbesondere zu erniedrigen, was üblicherweise durch Beschleifen erfolgt, oder auch zu erhöhen, wozu es grundsätzlich möglich ist, auf die Noppen Erhöhungen aufzukleben oder aufzuschweißen.

Ferner ist es möglich, bei durchsichtigen Trägermaterialien Logos, Firmenaufschriften, Beschreibungen oder Ähnliches auf das Trägermaterial aufzubringen, die nach der Herstellung der Einlage sichtbar sind.

Weitere Einzelheiten, Merkmale und Vorteile der Erfindung ergeben sich aus nachfolgender Beschreibung der Erfindung anhand der Zeichnung. Es zeigt:
- Fig. 1: eine schematisch stark vereinfachte Darstellung eines Trägers und einer Schablone zur Erläuterung der Prinzipien des erfindungsgemäßen Verfahrens,
- Fig. 2: eine der Fig. 1 entsprechende Darstellung einer auf die Schablone aufbringbaren Auflageschicht, und
- Fig. 3: eine schematisch stark vereinfachte Darstellung der Schichten, die bei einer bevorzugten Ausführungsform des erfindungsgemäßen Verfahrens zur Herstellung einer Einlage miteinander verpresst werden.

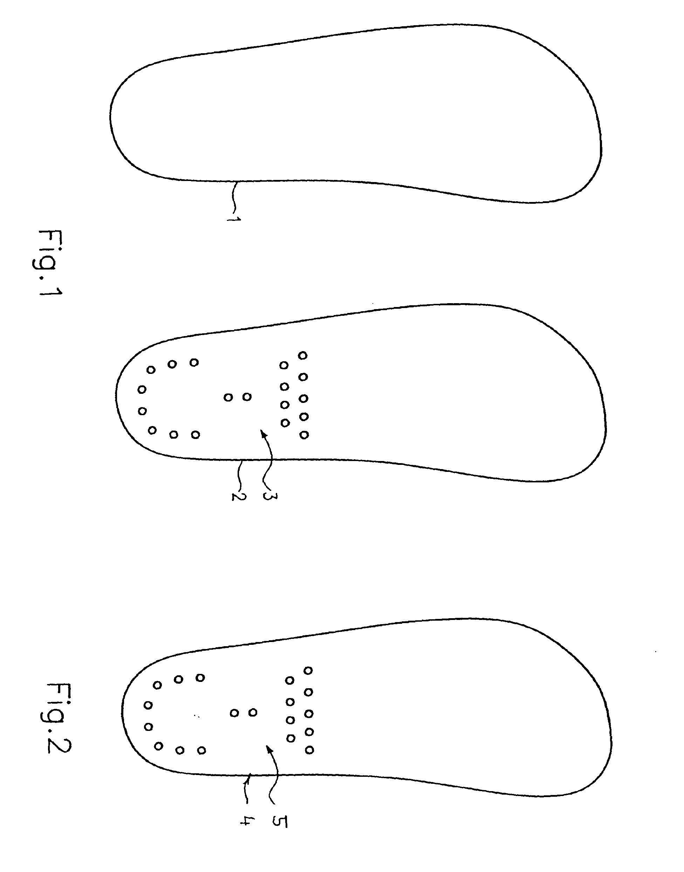

In Fig. 1 ist auf der linken Seite ein Träger 1 aus einem Trägermaterial aus thermoplastisch verformbarem Kunststoff dargestellt, das bereits in die gewünschte Form vorgestanzt ist.

Auf der rechten Seite der Fig. 1 ist eine Schablone 2 dargestellt, die beispielhaft ein Ausnehmungsmuster 3 aus Ausnehmungen unterschiedlicher Dimensionierung und Konturierung aufweist.

Die Schablone 2 wird zum Herstellen der Einlage auf den gemäß der dargestellten Ausführungsform identisch konturierte Träger 1 aufgelegt und danach in einer üblichen Presse unter Aufbringung von Wärme verpresst. Durch diesen Pressvorgang wird das thermoplastisch verformbare Material des Trägers 1 in die Ausnehmungen des Ausnehmungsmusters 3 hineingedrückt, so dass nach Entfernen der Schablone 2 vom Träger 1 eine Einlage entsteht, die mit einem Muster von Erhebungen oder Noppen versehen ist, das dem Ausnehmungsmuster 3 entspricht.

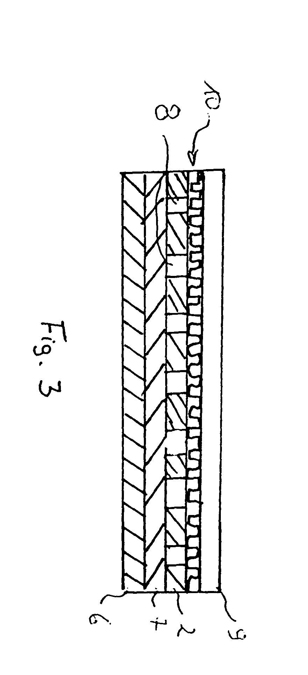

In Fig. 2 ist eine Auflageschicht 4 dargestellt, die bei der dargestellten Ausführungsform in ihrer Außenkontur dem Träger 1 und der Schablone 2 entspricht.

Die Auflageschicht 4 weist eine konturierte Oberfläche 5 auf, die bei der dargestellten Ausführungsform dem Lochmuster der Schablone 2 entspricht. Dies ist jedoch nicht zwingend. Wie eingangs erläutert, können letztendlich beliebige Konturierungen vorgesehen werden, die dazu in der Lage sind, beim Verpressen der Einlage Lufteinschlüsse im Bereich der Löcher der Lochschablone 2 zu entfernen.

In Fig. 3 ist eine schematisch stark vereinfachte Darstellung von Schichten dargestellt, die mit dem erfindungsgemäßen Verfahren zu einer Schuheinlage verarbeitet werden können.

Die Schichten umfassen zunächst eine Auflageschicht 6 für den Fuß, die beispielsweise aus Leder bestehen kann. Auf diese Schicht 6 kann eine Trägerschicht 7 aus thermoplastisch verformbarem Kunststoff aufgebracht werden, die beispielsweise aus Vinylacetat bestehen kann.

Auf die Schicht 7 wird zur Herstellung der Einlage die in Fig. 1 dargestellte Lochschablone 2 aufgebracht, die mit einer Mehrzahl von Löchern 8 versehen ist, von denen in Fig. 3 zur Verdeutlichung zwei mit der Bezugsziffer 8 gekennzeichnet sind.

Auf die Schablone 2 wird eine weitere Schicht in Form einer Auflageschicht 9 aufgebracht, die bei der in Fig. dargestellten Ausführungsform eine konturierte Oberfläche 10 aufweist, die nicht exakt dem Lochmuster der Schablone 2 entspricht. Auch eine solche konturierte Oberfläche 10 der Auflageschicht 9 macht es möglich, beim Verpressen der in Fig. 3 dargestellten Schichten in einer geeigneten Schuheinlagenpresse Lufteinschlüsse zu entfernen.

In die Ausnehmungen der Schablone können ferner auch vor dem Verpressen an auszuwählenden Stellen ausgestanzte Noppen oder Pads in verschiedenen Materialhärten, Formen, Materialzusammenstellungen, Stärken und Dimensionen eingelegt werden. Diese Einlagen verhindern beim Verpressen das Eindringen von Material des Trägers, so dass es möglich ist, Erhebungsmuster herzustellen. Diese Erhebungsmuster sind bei dieser Ausführungsform mit Erhebungen unterschiedlicher Härte, Form und Höhe versehen, je nach dem, welche Ausnehmungen der Schablone durch die Noppen vor dem Verpressen verschlossen wurden bzw. je nach dem, welche Ausnehmung der Schablone offen waren, so dass das Material des Trägers eindringen konnte. Wie gesagt, können die Pads auch aus Zusammenstellungen unterschiedlicher Materialien aufgebaut sein.

## Patentansprüche

1. Verfahren zum Herstellen einer Schuheinlage mit folgenden Verfahrensschritten:
- Herstellen eines Trägers aus Trägermaterial aus thermoplastisch verformbarem Kunststoff;
- Herstellen einer Schablone, die vorzugsweise mit einem Muster von in ihrer Anordnung, Größe und Anzahl sowie Stärke anpassbaren Ausnehmungen versehen wird;
- Auflegen der Schablone auf zumindestens eine Seite des Trägers;
- Auflegen einer konturierten vorzugsweise aus Gummi bestehenden Auflageschicht auf die Schablone;
- Verpressen des Trägers, der Schablone und der Auflageschicht unter gleichzeitiger Aufbringung von Wärme; und
- Entfernen der Schablone und der Auflageschicht nach dem Verpressen.

2. Verfahren nach Anspruch 1, **dadurch gekennzeichnet, dass** die Schablone auf beide Seiten des Trägers aufgelegt wird.

3. Verfahren nach Anspruch 1 oder 2, **dadurch gekennzeichnet, dass** der Träger vor dem Verpressen mit der Schablone in die gewünschte Einlagenkontur geschnitten bzw. gestanzt wird.

4. Verfahren nach Anspruch 1 oder 2, **dadurch gekennzeichnet, dass** der Träger in beliebiger Form und Größe hergestellt wird; und
dass die Schablone in der für die Einlage gewünschten Form und Größe hergestellt wird und mit dem Träger verpresst wird, durch die die Schablone in das Trägermaterial eingepresst wird; und
Entfernen des über die Schablone überstehenden Randes des Trägermaterials nach Entfernung der Schablone.

5. Verfahren nach einem der Anspruch 1 bis 4, **dadurch gekennzeichnet, dass** neben dem Träger weitere Schichten auf das Trägermaterial aufgebracht werden.

6. Verfahren nach einem der Anspruch 1 bis 5, **dadurch gekennzeichnet, dass** die sich nach dem Verpressen auf dem Trägermaterial ergebenden Erhebungen, die dem Muster von Ausnehmungen der Schablone entsprechen, nachbearbeitet werden.

7. Verfahren nach einem der Ansprüche 1 bis 6, **dadurch gekennzeichnet, dass** als Auflageschicht eine Schicht verwendet wird, deren Konturierung dem Lochmuster der Schablone entspricht.

8. Verfahren nach einem der Ansprüche 1 bis 6, **dadurch gekennzeichnet, dass** als Auflageschicht eine Schicht mit einer beliebig geformten konturierten Oberfläche verwendet wird.
